# NEUE EUROPÄISCHE PATENTSCHRIFT

(11) **EP 0 203 543 B2**
(45) Veröffentlichungstag und Bekanntmachung des Hinweises auf die Entscheidung über den Einspruch: **24.06.1998**
(45) Hinweis auf die Patenterteilung: 13.11.1991
(21) Anmeldenummer: 86106997.9
(22) Anmeldetag: 23.05.1986
(51) Int. Cl.: G07F 7/10

(54) **Verfahren und Anordnung zum Überprüfen von Chipkarten**
Method and device for verifying IC cards
Méthode et dispositif de vérification de cartes à circuit intégré

(30) Priorität: 31.05.1985 DE 3519554
(43) Veröffentlichungstag der Anmeldung: 03.12.1986
(73) Patentinhaber: SIEMENS AKTIENGESELLSCHAFT, 80333 München (DE)
(72) Erfinder: Krivachy, Thomas, Dr.-Phil., D-8000 München 71 (DE)

(56) Entgegenhaltungen:
- EP-A- 0 138 386
- US-A- 3 906 460
- US-A- 4 105 156
- IEEE SPECTRUM, February 1984, New York STEPHEN B. WEINSTEIN, "Smart Credit Cards: The Answer to Cashless Shopping",Seiten 43-49
- DIN ISO 4909

## Beschreibung

Die Erfindung bezieht sich auf ein Verfahren zum Überprüfen von Chipkarten entsprechend dem Oberbegriff des Patentanspruches 1. Weiterhin bezieht sich die Erfindung auf eine Anordnung zur Durchführung des Verfahrens.

Es ist bereits allgemein bekannt. Chipkarten als elektronisches Zahlungsmittel zu verwenden. Die Chipkarten werden beispielsweise an sogenannten POS (Point of Sales)-Endgeräten oder an öffentlichen Kartentelefonen benutzt. Die Chipkarten enthalten mindestens einen integrierten Schaltkreis, der als Speicherschaltkreis und/oder als Schaltkreis mit zusätzlichen Logikfunktionen, beispielsweise als Mikrorechner ausgebildet sein kann.

Wenn Chipkarten als elektronisches Zahlungsmittel oder auch als Berechtigungskarten für den Zugriff zu bestimmten Daten verwendet werden, werden die Chipkarten durch Vergleich mit Daten abhandengekommener Chipkarten, welche in Sperrdateien hinterlegt sind, aus Sicherheitsgründen auf ihre Echtheit und Gültigkeit überprüft. Bei Verlust der Chipkarte meldet der Kunde seine Konto- oder Teilnehmernummer an den Systembetreiber, der diese Nummer dann sperrt (Hot List) und dem Kunden eine neue Nummer zuteilt (siehe IEEE Spectrum, February 1984, New York - Stephen B. Weinstein, "Smart credit cards: the answer to cashless shopping", Seiten 43 bis 49). Bei bestimmten Nummern, z.B. der Fernmeldekontonummer, Personalnummer einer Firma oder Versicherungsnummer ist eine Änderung der Nummer oft mit erheblichem Aufwand verbunden.oder unmöglich.

Aus US-A 3, 906, 460 ist ein Identifikationssystem für Chipkarten bekannt, bei dem die fultigkeit des Chipkarte durch dem Vergleich einer in einer Sperrdaten eines Endgerätes hinterlegten Prüfnummer mit einer in der Chipkarte unveränderbar gespeicherten Prüfnummer erfolgt. Mehreren Chipkarten ist die gleiche Prüfnummer zugeordnet, sodaß ein Gruppe von Benutzen identifizierbar ist. Eine Änderung der Prüfnummer um Endgerät und/oder in der Chipkarte ist nicht vorgesehen.

Chipkarten mit einer festen von einer Bank vorgegebenen persönlichen Identifikationsnummer (PIN) oder einer vom Kunden individuell wählbaren Nummer (PIN) sind üblich. Die vom Kunden individuell wählbare Nummer kann dabei mehrmals geändert werden, ohne daß die Teilnehmernummer j geändert werden muß. Nach Ablauf der Karte wird hierbei dem berechtigten Benutzer beispielsweise von der Bank ein neuer Sicherheitscode ausgehändigt. Die Neuinitialisierung der Karte mit neuer vom Kunden wählbarer PIN ist damit möglich. Nach erfolgter Neuinitialisierung ist der Sicherheitscode wertlos. Karten zugriffe erfolgen wie gewohnt über die neugewählte PIN(US-A-4105 156).

Ferner ist aus US-A-4 105 156 ein Chipkarte system bekannt, bei dem die fültigkeit der Chipkarte sowohl durch Vergleich einer persönlichen Identifikationsnummer (PIN) als auch durch Vergleich einer Kontonummer erfolgt. Beide Nummern sind vom Benutzer in die Chipkarte eingebbar und somit bekannt.

Der Erfindung liegt die Aufgabe zugrunde, ein verfahren zum Überprüfen der Gültigkeit von Chipkarten anzugeben, bei dem die Sicherheit weiter erhöht wird, ohne daß bei dem Verlust einer Chipkarte die Teilnehmernummer geändert werden muß.

Erfindungsgemäß wird die Aufgabe bei dem verfahren der eingangs genannten Art durch die im kennzeichnenden Teil des Patentanspruchs 1 angegebenen Merkmale gelöst.

Sowohl dem Chipkartensystem als auch der Chipkarte sind sowohl die Teilnehmernummer als auch die Zustandsnummer bekannt, wogegen der Kunde nur die Teilnehmernummer kennt. Die heutige Technologie ermöglicht es, auf den Chipkarten Speicherbereiche festzulegen, deren Daten niemals gelöscht, geändert oder ausgelesen werden können, die aber auf der Chipkarte einen Vergleich zwischen einer eingegebenen und der abgespeicherten Nummer durchführen. Im Sinne der Erfindung bedeutet das, daß die Zustandsnummer von niemandem ausgelesen und damit kein Mißbrauch betrieben werden kann. Falls der Kunde veranlaßt, daß die ihm ausgegebene Chipkarte gesperrt werden soll, weil er sie verloren hat oder weil der Verdacht auf Vorhandensein einer weiteren, aber gefälschten Karte besteht, dann kann er gemäß der Erfindung eine neue Chipkarte mit der ursprünglichen Teilnehmernummer aber mit einer anderen Zustandsnummer erhalten.

Bei der Erfindung wird auf der Chipkarte nicht nur die Zustandsnummer, sondern auch die Teilnehmernummer mit einer zur Chipkarte übertragenen Prüfnummer verglichen.

Die Zustandsnummer enthält mindestens ein Bit. Aus Sicherheitsgründen ist es jedoch empfehlenswert, daß die Zustandsnummer mindestens zwei Binärzeichen umfaßt. Aus Sicherheitsgründen können die Zustandsnummern statistisch vergeben werden, d. h. bei Verlust einer Chipkarte wird bei der neuen Chipkarte die Zustandsnummer nicht um 1 erhöht oder erniedrigt, sondern statistisch ausgewählt.

Zur Erhöhung der Sicherheit wird in einer weiteren Variante der Erfindung die zur Chipkarte übertragene Prüfnummer, bestehend aus der Tei Inehmernummer und der variablen Zustandsnummer oder nur die Zustandsnummer nicht im Klartext, sondern verschlüsselt übertragen. Auf der Chipkarte wird die Prüfnummer dann entschlüsselt und die Zustandsnummer und auch die Teilnehmernummer wird mit der dort gespeicherten Zustandsnummer bzw. Teilnehmernummer verglichen. In der Sperrdatei ist der Schlüssel für jeden Teilnehmer bekannt und der verschlüsselte Text kann in Klartext umgewandelt werden.

Ein Datenverarbeitungssystem gemäß der Erfindung ist in Anspruch 4 definiert.

Zur Entschlüsselung der zur Chipkarte übertragenen Prüfnummer, zumindest der Zustandsnummer ist bei einer weiteren bevorzugten Ausführungsform eine Entschlüsselungseinrichtung auf der Chipkarte vorgesehen.

Eine Durchführung des Verfahrens gemäß der Erfindung wird im folgenden anhand einer Anordnung näher beschrieben.

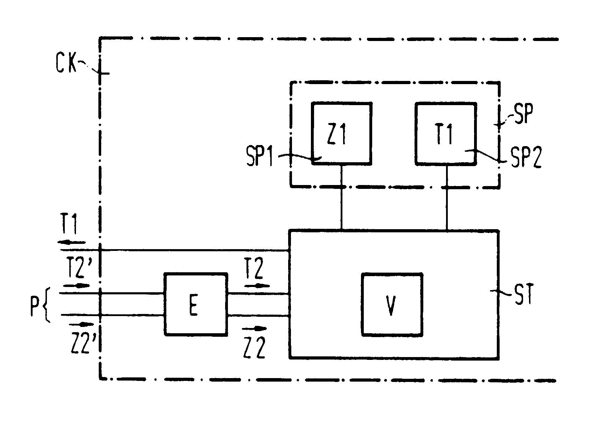

Die Figur zeigt ein Blockschaltbild einer Chipkarte.

Die Chipkarte CK ist in bekannter Weise mit einem elektronischen Schaltkreis versehen, der als Speicherschaltkreis und/oder als Schaltkreis mit zusätzlichen Logik-funktionen, beispielsweise als Mikrorechner ausgebildet ist. Der Speicher SP enthält einen ersten Speicherbereich SP1, in dem die dem Teilnehmer zugeordnete Zustandsnummer Z1 gespeichert ist und einen zweiten Speicherbereich SP2, in dem eine dem Teilnehmer zugeordnete Teilnehmernummer T1 gespeichert ist. Während die Teilnehmernummer T1 über eine Steuereinheit zu einem Endgerät von der Chipkarte CK ausgelesen werden kann, ist die Zustandsnummer Z1 von außen unzugänglich gespeichert.

Beim Einschieben der Chipkarte CK in ein Endgerät wird zur Überprüfung der Chipkarte aus dem Speicherbereich SP1 die Zustandsnummer Z1 und auch die Teilnehmernummer T1 ausgelesen und einem Vergleicher V in der Steuereinheit ST zugeführt. Von dem Endgerät oder einer mit diesem verbundenen Zentralstelle wird der Chipkarte CK eine Prüfnummer P zugeführt, die zumindest die der Zustandsnummer Z1 entsprechende Zustandsnummer Z2 und die der Teilnehmernummer T1 entsprechende Teilnehmernummer T2 enthält. Die Übertragung der Zustandsnummer Z2 und gegebenenfalls auch der Teilnehmernummer T2 kann durch die Signale Z2' bzw. T2' verschlüsselt erfolgen. Auf der Chipkarte CK ist eine Entschlüsselungseinheit E vorgesehen, die die Zustandsnummer Z2 und die Teilnehmernummer T2 im Klartext zur Verfügung stellt und ebenfalls dem Vergleicher V zuführt. Bei Übereinstimmung der. Zustandsnummern Z1 und Z2 und der Teilnehmernummern T1 und T2 gibt der Vergleicher V ein Vergleichssignal ab, das dem Endgerät und gegebenenfalls der Zentralstelle zugeführt wird und das anzeigt, daß die Chipkarte CK gültig ist. Falls das Vergleichssignal nicht abgegeben wird, wird die Chipkarte CK gesperrt oder abgewiesen.

Die Zustandsnummern Z1 und Z2 umfassen mindestens zwei Binärzeichen und werden bei der Vergabe statistisch ermittelt. Beim Verlust einer Chipkarte CK wird dem Teilnehmer eine neue Chipkarte CK ausgegeben, die im Speicherbereich SP2 dieselbe Teilnehmernummer T1 enthält. jedoch im Speicherbereich SP1 eine andere Zustandsnummer Z1 enthält, so daß diese Chipkarte CK nur dann benutzt werden kann, wenn in der Sperrdatei des Chipkartensystems die Prufnummer P mit der neuen Zustandsnummer Z1 gespeichert ist.

## Patentansprüche

1. Verfahren zum Überprüfen von Chipkarten (CK) hinsichtlich der Gültigkeit, bei dem auf der Chipkarte (CK) eine dem Teilnehmer bekannte Teilnehmernummer (T1) und eine weitere Nummer (Z1) gespeichert ist und bei dem diese Nummern (T1, Z1) in der Chipkarte (CK) bei der Überprüfung der Gültigkeit der Chipkarte (CK) mit einer von außen zugeführten Prüfnummer (P) verglichen werden, bei dem die Teilnehmernummer (T1) in Falle eines Verlusts der Chipkarte (CK) auch in einer neuen Chipkarte (CK) unverändert bleibt und bei dem die weitere Nummer (Z1) unveränderbar in der Chipkarte (CK) gespeichert ist und nur innerhalb der Chipkarte (CK) übertragen werden kann,
dadurch gekennzeichnet,
daß in einer Sperrdatei des Chipkartensystems eine dem Benutzer unbekannte Zustandsnummer (Z2) und die Teilnehmernummer (T2) als Prüfnummer (P) gespeichert sind, die zur Chipkarte übertragen wird, und
daß im Falle eines Verlusts der Chipkarte (CK) eine neue Zustandsnummer (Z1, Z2) sowohl in der Sperrdatei wie auch in einer neuen Chipkarte (CK) neu gespeichert wird.

2. Verfahren nach Anspruch 1,
**dadurch gekennzeichnet,**
daß die Zustandsnummer (Z1) mindestens zwei Binärzeichen umfaßt.

3. Verfahren nach Anspruch 1 oder 2,
**dadurch gekennzeichnet,**
daß zumindest die zur Chipkarte (CK) übertragene Zustandsnummer (Z2') verschlüsselt wird.

4. Datenverarbeitungssystem mit mindestens einem Endgerät, das mit einer Chipkarte (CK) koppelbar ist, in der zur Überprüfung ihrer Gültigkeit eine dem Teilnehmer bekannte Teilnehmernummer (T1) und eine weitere Nummer (Z1) gespeichert ist und bei dem diese Nummern (T1, Z1) in der Chipkarte (CK) bei der Überprüfung der Gültigkeit der Chipkarte (CK) mit einer von außen zugeführten Prüfnummer (P) verglichen werden, bei dem auf der Chipkarte (CK) ein Speicher (SP) mit einem von außen unzugänglichen ersten Speicherbereich (SP1) für die als weitere Nummer dienende Zustandnummer (Z1), die in der Chipkarte (CK) unveränderbar gespeichert ist und einem zweiten Speicherbereich (SP2) für die Teilnehmernummer (T1), die im Falle eines Verlusts der Chipkarte (CK) auch in einer neuen Chipkarte (CK) unverändert bleibt und eine Steuereinheit (ST) vorgesehen sind, die einen Vergleicher (V) enthält, der im Falle der Übereinstimmung mit der Prüfnummer (P) ein Vergleichssignal abgibt,
dadurch gekennzeichnet,
daß in einer Sperrdatei des Chipkartensystems eine dem Benutzer unbekannte Zustandnummer (Z2) und eine Teilnehmernummer (T2) als Prüfnummer (P) gespeichert sind, die zur Chipkarte übertragbar ist und
daß im Falle des Verlusts der Chipkarte (CK) eine neue Zustandnummer (Z1, Z2) sowohl in der Sperrdatei wie auch in einer neuen Chipkarte speicherbar ist.

5. Datenverarbeitungssystem nach Anspruch 4,
**dadurch gekennzeichnet,**
daß die Chipkarte (CK) eine Entschlüsselungseinheit (E) zumindest für die zugeführte Zustandsnummer (Z2') enthält.

## Claims

1. Method for verifying chip cards (CK) in which a subscriber number (T1) known to the subscriber and a further number (Z1) are stored on the chip card (CK), and in which these numbers (T1, Z1) in the chip card (CK) are compared during the verification of the chip card (CK) with a check number (P) which is supplied from the outside, in which, in the case of the chip card (CK) being lost, the subscriber number (T1) remains unchanged even in a new chip card (CK), and in which the further number (Z1) is stored unchanged in the chip card (CK) and can be transmitted only within the chip card (CK), characterized in that a status number (Z2), which is unknown to the user, and the subscriber number (T2) are stored as check number (P) in a locked-out file of the chip card system, which check number (P) is transmitted to the chip card, and in that, in the case of the chip card (CK) being lost, a new status number (Z1, Z2) is newly stored both in the locked-out file and in a new chip card (CK).

2. Method according to Claim 1, characterized in that the status number (Z1) comprises at least two binary characters.

3. Method according to Claims 1 or 2, characterized in that at least the status number (Z2') transmitted to the chip card (CK) is encrypted.

4. Data processing system having at least one terminal, which can be coupled to a chip card (CK) in which a subscriber number (T1) known to the subscriber and a further number (Z1) are stored for verifying the card and in which system these numbers (T1, Z1) in the chip card (CK) are compared during the verification of the chip card (CK) with a check number (P) which is supplied from the outside, in which a memory (SP) with a first memory area (SP1), which is inaccessible from the outside and is for the status number (Z1) which serves as a further number and is stored unchanged in the chip card (CK), and a second memory area (SP2) for the subscriber number (T1) which, in the case of the chip card (CK) being lost, also remains unchanged in a new chip card (CK), and a control unit (ST) are provided on the chip card (CK), which control unit (ST) contains a comparator (V) which emits a comparison signal when there is correspondence with the check number (P), characterized in that a status number (Z2), which is unknown to the user, and a subscriber number (T2) are stored as check number (P) in a locked-out file of the chip card system, which check number (P) transmitted to the chip card, and in that in the case of the chip card (CK) being lost, a new status number (Z1, Z2) can be stored both in the locked-out file and in a new chip card.

5. Data processing system according to Claim 4, characterized in that the chip card (CK) contains an encryption unit (E) at least for the supplied status number (Z2').

## Revendications

1. Procédé pour contrôler la validité de cartes à puce (CK), qui consiste à mémoriser sur la carte à puce (CK) un numéro d'abonné (T1) connu de l'abonné et un autre numéro (Z1) et à comparer ces numéros (T1, Z1) de la carte à puce (CK), lors du contrôle de la validité de la carte à puce (CK), à un numéro de contrôle (P) amené de l'extérieur, le numéro d'abonné (T1) restant inchangé même dans une nouvelle carte à puce (CK) dans le cas où l'on a perdu la carte à puce (CK) et l'autre numéro (Z1) étant mémorisé dans la carte à puce (CK) sans possibilité d'être modifié et ne pouvant être transmis que dans la carte à puce (CK),
caractérisé
en ce qu'il consiste à mémoriser, dans un fichier de blocage du système de carte à puce, un numéro d'état (Z2) inconnu de l'utilisateur et le numéro d'abonné (T2) comme numéro de contrôle (P) qui sont transmis à la carte à puce, et
en ce que, en cas de perte de la carte à puce (CK), à remémoriser un nouveau numéro d'état (Z1, Z2) tant dans le fichier de blocage que dans une nouvelle carte à puce (CK).

2. Procédé suivant la revendication 1,
caractérisé
en ce que le numéro d'état (Z1) comprend au moins deux signes binaires.

3. Procédé suivant la revendication 1 ou 2,
caractérisé
en ce qu'au moins le numéro d'état (Z2') transmis à la carte à puce (CK) est codé.

4. Système de traitement de données comprenant au moins un terminal qui peut être couplé à une carte à puce (CK), dans laquelle sont mémorisés, afin d'en vérifier la validité, un numéro d'abonné (T1) connu de l'abonné et un autre numéro (Z1) et dans lequel ces numéros (T1, Z1) de la carte à puce (CK) sont comparés, lors du contrôle de la validité de la carte à puce (CK), à un numéro de contrôle (P) amené de l'extérieur, dans lequel il est prévu sur la carte à puce (CK) une mémoire (SP) ayant une première zone de mémoire (SP1) inaccessible de l'extérieur et destinée au numéro d'état (Z1) servant d'autre numéro, qui est mémorisé sans possibilité de modification dans la carte à puce (CK) et une deuxième zone de mémoire (SP2) pour le numéro d'abonné (T1) qui, en cas de perte de la carte à puce (CK), reste non modifié également dans une nouvelle carte à puce (CK) et une unité de commande (ST) qui comporte un comparateur (V), lequel émet un signal de comparaison en cas de coïncidence avec le numéro de contrôle (P),
caractérisé
en ce qu'il est mémorisé dans un registre de blocage du système de carte à puce, un numéro d'état (Z2) inconnu de l'utilisateur et un numéro d'abonné (T2), en tant que numéro de contrôle (P), qui peut être transmis à la carte à puce, et
en ce que, en cas de perte de la carte à puce (CK), il est possible de mémoriser un nouveau numéro d'état (Z1, Z2) tant dans le fichier de blocage que dans une nouvelle carte à puce.

5. Système de traitement de données suivant la revendication 4,
caractérisé
en ce que la carte à puce (CK) comporte une unité de décodage (E) au moins pour le numéro d'état (Z2') qui est amené.
